Europäisches Patentamt

European Patent Office

Office européen des brevets

(11) Publication number: **0 075 482**
A2

(12) # EUROPEAN PATENT APPLICATION

(21) Application number: **82304967.1**

(22) Date of filing: **21.09.82**

(51) Int. Cl.³: **E 02 F 3/76**, B 62 D 53/02

(30) Priority: **22.09.81 US 304376**
**12.07.82 US 397532**

(43) Date of publication of application: **30.03.83**
**Bulletin 83/13**

(84) Designated Contracting States: **AT BE CH DE FR GB IT**
**LI LU NL SE**

(71) Applicant: **HAULMASTERS, INC., 100 Mission Woods**
**Road, Industrial Airport Kansas 66031 (US)**

(72) Inventor: **Hardwick, Lee R., 211 W. 125 Street Terrace,**
**Kansas City Missouri 64145 (US)**

(74) Representative: **Allen, William Guy Fairfax et al, J.A.**
**KEMP & CO. 14 South Square Gray's Inn, London**
**WC1R 5EU (GB)**

(54) Articulated earth-working vehicle.

(57) An earth working vehicle comprising a rear frame section (2) capable of free standing against sideward swinging relative to the longitudinal axis of the rear frame section and a front frame section (4) which is disconnectedly articulated at its rear end by an articulation joint (6) to the rear frame section. The rear frame section has mounted thereon a power section (12) including the engine (13) and the controls (20, 21) for the vehicle and also the rear ground engaging wheels (15). These rear wheels (15) are driven by the engine and are carried by an axle assembly (16) which is fixedly secured to the rear frame section. The forward end of the front frame section (4) is provided with front ground engaging wheels (31) and the earth moving tool (5) extends downwardly from said front frame section (4). Alternative front frame sections with different tool arrangements can be used for various earth moving functions.

- 1 -

DESCRIPTION

"ARTICULATED EARTH-WORKING VEHICLE"


The present invention relates to an articulated earth-working vehicle.

Earth-working machines, such as motor graders, are commonly used for smoothing roads, terracing, and other grading operations. However, such machines have heretofore not been economically adaptable for uses other than grading. Similarly, front end loaders, ditch digging machines and the like are also typically single purpose machines. Thus, a contractor usually has to invest substantial amounts of capital in several single purpose machines.

According to the present invention, we provide an earth-working vehicle comprising a rear frame section capable of free standing against sideward swinging relative to the longitudinal axis of the rear frame section, a front frame section disconnectably articulated at its rear end to the rear frame section by an articulation joint, rear ground engaging wheels which are carried by an axle assembly which is fixedly secured to said rear frame section, a power section and the controls for the vehicle being mounted on the rear frame section, front ground engaging wheels being mounted on the forward end of the front frame section and an earth working tool extending downwardly from the front frame section.

Such a vehicle is adaptable to at least several uses and functions, so that substantial amounts of investment capital can be saved. Because the front and rear frame structures are disconnectible, various front frame structures including different earth-working tools, such as a front end loader, ditcher, or the like can be economically adapted to a single rear frame structure.

In order that the advantages of this invention will become apparent, the following description is given, merely by way of example, reference being made to the accompanying drawings, in which:-

Figure 1 is a perspective view of one embodiment of articulated earth-working vehicle according to the present invention;

Figure 2 is a side elevation of the articulated vehicle of Figure 1;

Figure 3 is a diagrammatic, plan view of the vehicle shown in a turning relationship;

Figure 4 is a diagrammatic, plan view of the vehicle shown in a crabbing relationship;

Figure 5 is a transverse, rear fragmentary view of the power section showing the connection between an axle and frame members;

Figure 6 is a fragmentary, elevational view showing details of the connection between the axle and frame members; and

Figure 7 is a fragmentary, plan view showing details of the connection between the axle and frame members.

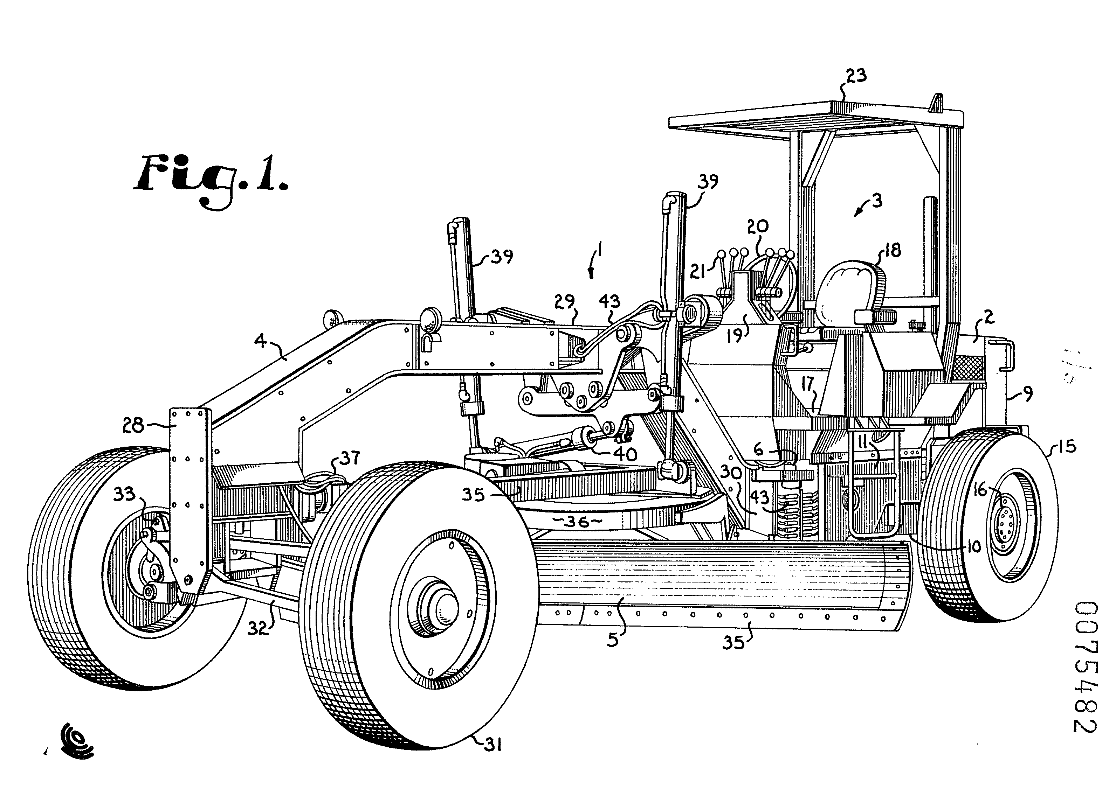

Referring to Figure 1, the illustrated vehicle 1 has a rear frame structure 2 comprising a power section and including an operator's station 3. A front frame structure 4 is connected to the rear frame structure and carries an earth-working tool 5. An articulating joint 6 connects the front and rear frame structures together and is disconnectable, whereby various tools and front frame structures can be economically and interchangeably attached to the rear frame structure, thereby using a single power section and operator's station for a variety of purposes.

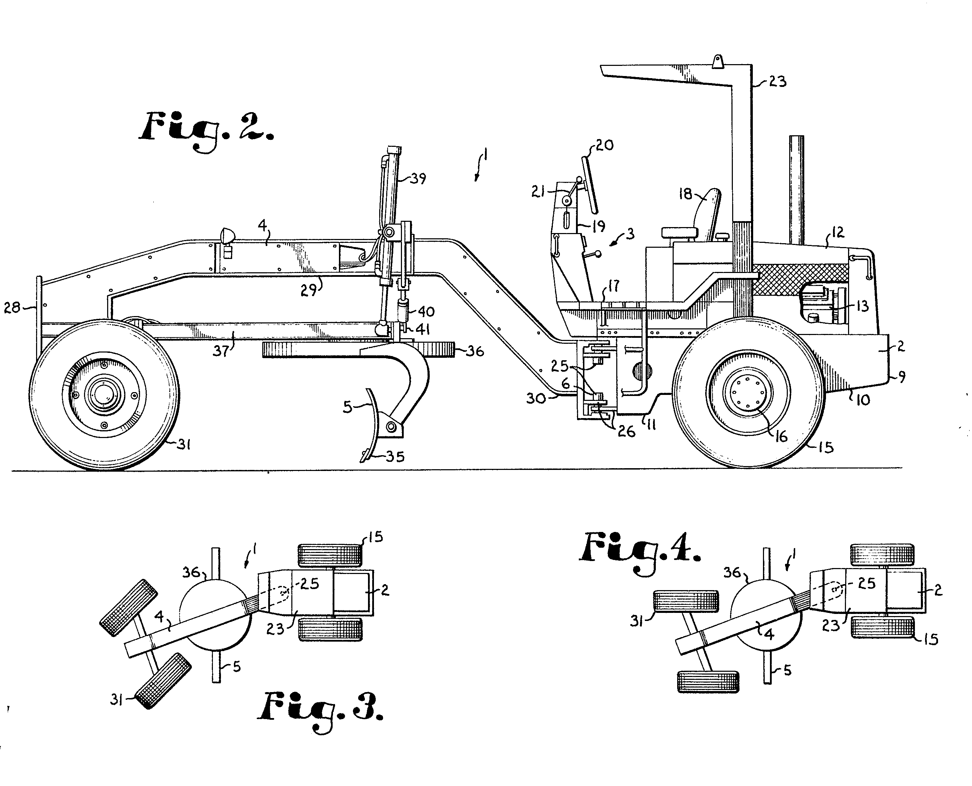

The rear frame structure 2 has a rear end 9, intermediate portion 10 and forward end 11, and includes the power section which has an enclosure 12 on the rear end 9 concealing a suitable engine 13 (Figure 2), connected to a transmission (not shown). As is conventional for earth-working equipment, suitable hydraulic pumps are driven by the engine 13 for powering various rams, described below, to control positioning of the earth-working tools.

In the illustrated example, a single set of ground engaging wheels 15 is suitably mounted on an axle assembly 16 and driven by the engine 13. Tandem wheels may alternatively be employed.

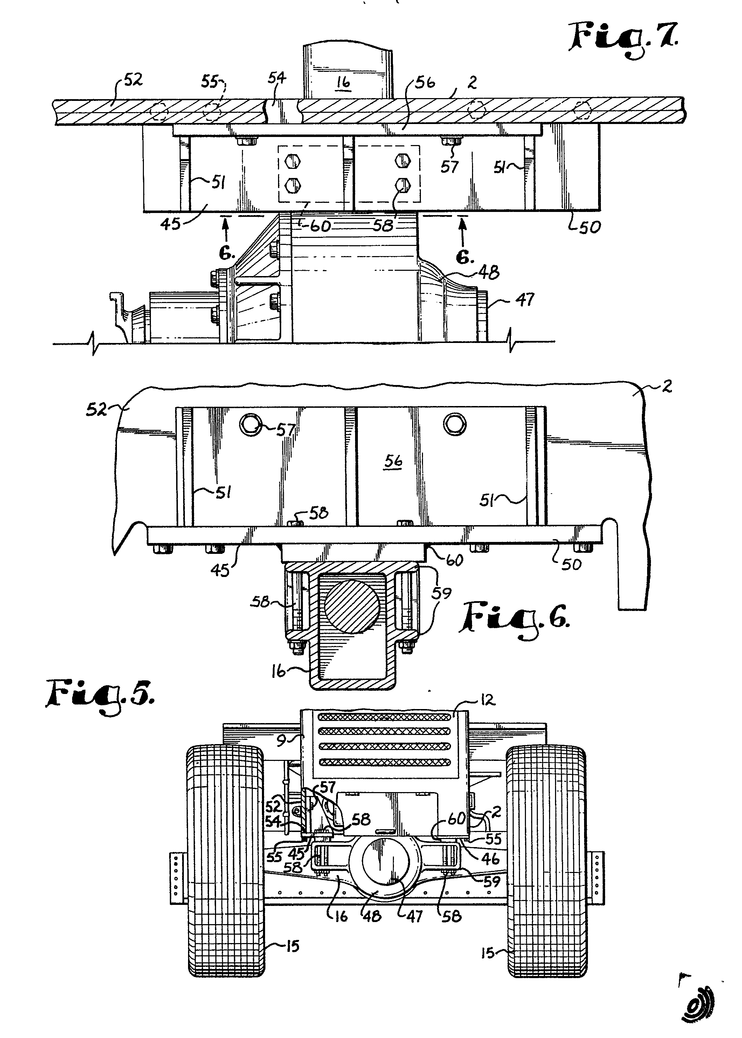

The axle assembly 16 is fixed relative to the rear frame structure 2, so that the rear frame structure is independently movable and does not tend to heel or tip over on a swing axle, as is common in many types of earth working equipment. As illustrated in Figures 5, 6 and 7, spaced brackets 45 and 46 connect the axle assembly 16 to the rear frame structure 2 in a fixed relationship. The axle assembly 16 may include as a part of the standard configuration of the rear frame structure 2, a bearing means in the form of a main rocker or pivot 47 suitably connected to the supporting frame portions of the frame structure 2 and received within a bearing eye 48 centered in the axle assembly 16, thereby facilitating side-to-side swinging or heeling over of the rear frame structure 2 relative to the axle assembly 16. To prevent this heeling or swinging movement to the limit of the bearing means, the axle assembly is fixed, as by the brackets 45 and 46.

Each of the brackets 45 and 46 comprises an elongate, L-shaped plate 50 having upwardly extending gussets 51, the plate 50 being positioned against a beam wall 52 of the rear frame structure 2. The gussets 51 are inset on the plate 50, leaving a lip 54 which extends under the beam wall 52 and is secured thereto, as by fasteners 55. Additionally, a web 56 extends between the gussets 51 and at a right angle to the plate 50 and is also secured to the beam wall 52, as by fasteners 57.

Flanges 59 extend from the axle assembly 16 and fasteners, such as bolts 58, secure the plate 50 to the axle assembly, thereby interconnecting the rear frame structure 2 and axle assembly 16 in a fixed relationship. A spacer plate 60 secured to the underside of the plate 50 correctly positions the bracket 45 relative to the axle assembly 16.

The operator's station 3 is mounted generally over the forward end 11 and includes a platform 17, a forwardly facing operator's seat 18 and a console 19. Mounted on the console 19 is a steering wheel 20 and a bank of joystick levers 21 for controlling operation of the various hydraulic rams.

A roll-over protection structure 23 is rigidly mounted on the rear frame structure 2 and extends over the operator's station 3 for at least partial shielding from the elements and to protect the operator from falling objects, roll-overs and the like.

The articulating joint 6 is situated substantially under the operator's station 3 and includes upper and lower, axially aligned vertically oriented king pins 25, suitably mounted on ears 26 respectively extending from the forward end 11 of the rear frame structure 2 and from the front frame structure 4 as described below. The attachment of the articulating joint 6 is disconnectable, so that one can separate the front frame structure 4 from the rear frame structure 2 and interchangeably attach front frame structures of various other configurations (not shown) and having earth engaging tools or devices thereon, such as ditch diggers, front end loaders and the like for various other purposes.

The exemplary front frame structure 4 is a grader and has a forward end 28, an intermediate tool carrier section 29, and a rear end 30. Front ground engaging wheels 31 and a swing mounted or non-fixed axle assembly 32 are mounted at the forward end 28 for smooth, planar grading and are associated with appropriate steering means, including a hydraulic ram 33 to turn the wheels 31 up to approximately 50 degrees left or right (Figures 3 and 4). Appropriate means (not shown) are also included in conjunction with the forward end 28 to cause coordinated sideward tilting of the front wheels 31. As shown in Figure 3, the wheels 31 can be turned relative to the rear wheels 15 so as to cause the earth-working vehicle 1 to turn, first turning the front frame structure 4 and tending to pull the rear frame structure 2 therearound.

Alternatively, the front frame structure 4 can be angled relative to the rear frame structure 2, and the front wheels 31 aligned in the same direction as the rear wheels 15, thereby crabbing the front and rear wheels relative to each other, as for grading a ditch or the like. In this situation, the operator's station 3 does not tend to turn with the front frame structure 4 but remains rigidly mounted on the rear frame structure 2. Particularly in the crabbing situation of Figure 4, the operator is provided with a safe, straight-ahead view of superior visibility as the vehicle moves, rather than the operator travelling sidewardly, as would be the case if the operator's station was on or aligned with the front frame structure.

- 6 -

In the illustrated example, the tool 5 is a scraper blade 35 and is suitably mounted on a turntable arrangement 36 connected by a drag beam 37 to the forward end 28. Left and right elevation rams 39 extend between the tool carrier section 29 and the turntable arrangement 36, and a ram 40 is suitably mounted via a linkage arrangement 41 to cause sideward shifting of the scraper blade 35. A gear box arrangement 42 provides rotation of the blade 35.

Suitable hydraulic conduits 43 having quick disconnect fittings extend from the various rams 33, 39 and 40 to the controls 21 and the hydraulic pump.

The ears 26 for the articulated joint 6 extend from the rear end 30 of the front frame structure 4 and are suitably affixed to the king pins 25.

The above described articulated earth-working vehicle 1 provides economical interchangeability of the front frame structure 4 and tool 5 with other variously configured front frame structures and tools adapted for jobs other than scraping or grading. Upon disconnection of the articulating joint 6, the operator's station 3 and console 19 remain with the power components of the rear frame structure 2 to enable interchangeability. Further, the quick disconnect fittings of the hydraulic conduits 43 enable relatively rapid changeover of hydraulic power lines.

The positioning of the operator's station 3, as described above, provides superior visibility to other known motor graders, as well as the aforementioned interchangeability of working parts.

C L A I M S

1. An earth-working vehicle comprising a frame (2,4) having front and rear ground engaging wheels (31,15), an operating station (3), including a power section (12) and controls (20,21) mounted on said frame and an earth working tool (5) carried by said frame, characterised in that the vehicle comprises a rear frame section (2) capable of free standing against sideward swinging relative to the longitudinal axis of the rear frame section and a front frame section (4) disconnectably articulated at its rear end by an articulation joint (6) to the rear frame section, in that the rear frame section (2) has mounted thereon the power section (12), the controls (20,21) for the vehicle and the rear ground engaging wheels (15), in that the rear ground engaging wheels (15) are driven by the engine and are carried by an axle assembly (16) which is fixedly secured to the rear frame section, in that the front ground engaging wheels (31) are mounted at the forward end of the front frame section (4) and in that the earth working tool (5) extends downwardly from said front frame section (4).

2. A vehicle according to claim 1, characterised in that the rear ground engaging wheels (15) are mounted generally centrally of the length of the rear frame section (2), the engine (13) is mounted generally rearwardly of the wheels and the articulation joint (6) is mounted at the forward end of the rear frame section (2).

3. A vehicle according to claim 2, characterised in that said articulation joint includes at least one generally vertical king pin (25) and in that the rear end of the front frame section (4) and the forward end of the rear frame section (2) are each provided with ears (26) through which said at least one king pin (25) passes.

4. A vehicle according to claim 2 or 3, characterised in that said controls (20,21) for the vehicle are located over the forward end of the rear frame section (2).

5. A vehicle according to any preceding claim, characterised in that the axle assembly (16) is fixedly secured to the rear frame section (2) by spaced brackets (45,46).

Fig.1.

0075482

Fig.2.

Fig.3.

Fig.4.

0075482

**Fig.7.**

**Fig.6.**

**Fig.5.**